# EUROPEAN PATENT APPLICATION

(11) **EP 4 811 150 A1**
(43) Date of publication of application: **23.09.2026**
(21) Application number: 25190147.6
(22) Date of filing: 17.07.2025
(51) Int. Cl.: G06F 15/177

(54) **INFORMATION PROCESSING SYSTEM, INFORMATION PROCESSING PROGRAM, AND INFORMATION PROCESSING METHOD**

(30) Priority: 18.03.2025 JP 2025043991
(71) Applicant: FUJIFILM Business Innovation Corp., Minato-ku Tokyo (JP)
(72) Inventor: FUJII, Masaru, Yokohama-shi, Kanagawa (JP)
(74) Representative: Becker Kurig & Partner Patentanwälte mbB

(57) **Abstract**

An information processing system includes a processor configured to receive setting information for changing a setting of a target apparatus, extract, in a case where there are plural pieces of received setting information, conflict setting information in a conflict relationship from the plural pieces of setting information, acquire, for plural pieces of the conflict setting information, evaluation values regarding an effect of a function in a case where the setting of the target apparatus is changed by the conflict setting information, update at least one of the plural pieces of conflict setting information such that the conflict relationship is resolved, based on the evaluation values for the plural pieces of conflict setting information, and set, in the target apparatus, the plural pieces of setting information for which the conflict relationship is resolved.

## Description

### BACKGROUND OF THE INVENTION

### (i) Field of the Invention

The technique of the present disclosure relates to an information processing system, an information processing program, and an information processing method.

### (ii) Description of Related Art

JP2020-140231A discloses a distribution system that controls distribution of software to a plurality of devices capable of operating the software, the distribution system including a reception unit that receives, from a user, designation of a distribution reservation of the software for at least any of the plurality of devices, a setting unit that sets a distribution reservation of the software for the plurality of devices based on a predetermined condition defined in advance, a merge unit that merges the distribution reservation received by the reception unit and the distribution reservation by the setting unit, and a control unit that controls the distribution of the software based on a distribution reservation merged by the merge unit, in which the merge unit prioritizes the setting of the distribution reservation designated by the reception unit over the setting of the distribution reservation set by the setting unit in merging the distribution reservations.

JP2021-196652A discloses an information processing apparatus that manages use of a reserved resource, the information processing apparatus including a use management unit that receives a use start of the resource, and a reservation control unit that changes a reservation of the resource to a first status in a case where a first time elapses from a use start time point of the resource without the reception of the use start of the resource by the use management unit, in which in a case where the use start of the reservation in the first status is received in a period from the elapse of the first time to elapse of a second time, priority processing is performed on an earlier reservation of new reservations registered in a time zone overlapping with the reservation in the first status.

### SUMMARY OF THE INVENTION

There is a problem that, in a case where a plurality of pieces of setting information for changing a setting of a target apparatus are received and the received plurality of pieces of setting information are in a conflict relationship, a part of the pieces of setting information may not be set.

An object of the present disclosure is to provide an information processing system, an information processing program, and an information processing method capable of preventing, even in a case where pieces of setting information for changing a setting of a target apparatus conflict with each other, a part of the pieces of setting information from being unable to be set.

According to a first aspect of the present disclosure, there is provided an information processing system including a processor configured to receive setting information for changing a setting of a target apparatus, extract, in a case where there are a plurality of pieces of received setting information, conflict setting information in a conflict relationship from the plurality of pieces of setting information, acquire, for a plurality of pieces of the conflict setting information, evaluation values regarding an effect of a function in a case where the setting of the target apparatus is changed by the conflict setting information, update at least one of the plurality of pieces of conflict setting information such that the conflict relationship is resolved, based on the evaluation values for the plurality of pieces of conflict setting information, and set, in the target apparatus, the plurality of pieces of setting information for which the conflict relationship is resolved.

According to a second aspect of the present disclosure, there is provided the information processing system according to the first aspect, in which the processor may be configured to perform processing of not employing the conflict setting information for which an evaluation value is equal to or less than a threshold value or correcting the conflict setting information to another piece of the conflict setting information to perform extraction processing of the conflict setting information, acquisition processing of the evaluation value, and update processing of the conflict setting information.

According to a third aspect of the present disclosure, there is provided the information processing system according to the first or second aspect, in which the processor may be configured to, in a case where there is remaining conflict setting information for which the conflict relationship is not resolvable, issue a notification to a provider of the setting information.

According to a fourth aspect of the present disclosure, there is provided the information processing system according to any one of the first to third aspects, in which the processor may be configured to, in a case where automatic update of the setting information is enabled, set the setting information in the target apparatus without issuing a notification to a provider of the setting information.

According to a fifth aspect of the present disclosure, there is provided the information processing system according to any one of the first to fourth aspects, in which the processor may be configured to, in a case where automatic update of the setting information is disabled, notify a provider of the setting information of a result of update processing of the conflict setting information, and set the setting information in the target apparatus in a case where permission is obtained.

According to a sixth aspect of the present disclosure, there is provided an information processing program for causing a computer to execute a process including receiving setting information for changing a setting of a target apparatus, extracting, in a case where there are a plurality of pieces of received setting information, conflict setting information in a conflict relationship from the plurality of pieces of setting information, acquiring, for a plurality of pieces of the conflict setting information, evaluation values regarding an effect of a function in a case where the setting of the target apparatus is changed by the conflict setting information, updating at least one of the plurality of pieces of conflict setting information such that the conflict relationship is resolved, based on the evaluation values for the plurality of pieces of conflict setting information, and setting, in the target apparatus, the plurality of pieces of setting information for which the conflict relationship is resolved.

According to a seventh aspect of the present disclosure, there is provided an information processing method including receiving setting information for changing a setting of a target apparatus, extracting, in a case where there are a plurality of pieces of received setting information, conflict setting information in a conflict relationship from the plurality of pieces of setting information, acquiring, for a plurality of pieces of the conflict setting information, evaluation values regarding an effect of a function in a case where the setting of the target apparatus is changed by the conflict setting information, updating at least one of the plurality of pieces of conflict setting information such that the conflict relationship is resolved, based on the evaluation values for the plurality of pieces of conflict setting information, and setting, in the target apparatus, the plurality of pieces of setting information for which the conflict relationship is resolved.

According to the first aspect, the sixth aspect, or the seventh aspect of the present invention, even in a case where the setting information for changing the setting of the target apparatus is in conflict, a part of the pieces of setting information can be prevented from being unable to be set.

According to the second aspect of the present disclosure, the conflict setting information in the conflict relationship can be reduced.

According to the third aspect of the present disclosure, the provider of the conflict setting information for which the conflict relationship is not resolvable can be prompted to take measures to resolve the conflict relationship.

According to the fourth aspect of the present disclosure, the setting information can be quickly set in the target apparatus, as compared with a case where the permission for the setting of the setting information is obtained from the provider of the setting information and then the setting information is set.

According to the fifth aspect of the present disclosure, the setting information against the intention of the provider of the setting information is prevented from being set.

### BRIEF DESCRIPTION OF THE DRAWINGS

Exemplary embodiment(s) of the present invention will be described in detail based on the following figures, wherein:
FIG. 1 is a diagram showing an example of a system configuration of an information processing system;
FIG. 2 is a diagram for describing a digital shadow;
FIG. 3 is a diagram showing an example of a hardware configuration of a cloud server;
FIG. 4 is a diagram showing an example of a functional configuration of the cloud server;
FIG. 5 is a table showing an example of a reservation database;
FIG. 6 is a diagram showing an example of conflict setting information;
FIG. 7 is a diagram showing an example of an evaluation value corresponding to the conflict setting information; and
FIG. 8 is a flowchart of information processing.

### DETAILED DESCRIPTION OF THE INVENTION

Hereinafter, exemplary embodiments of the present disclosure will be described in detail with reference to drawings.

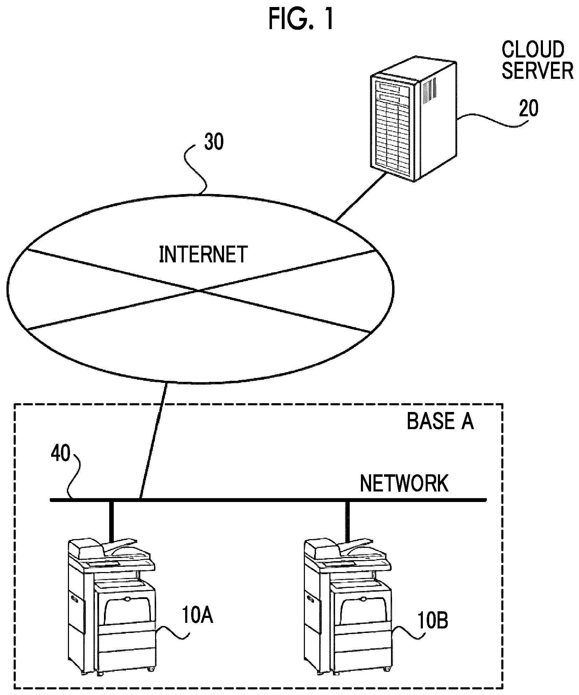

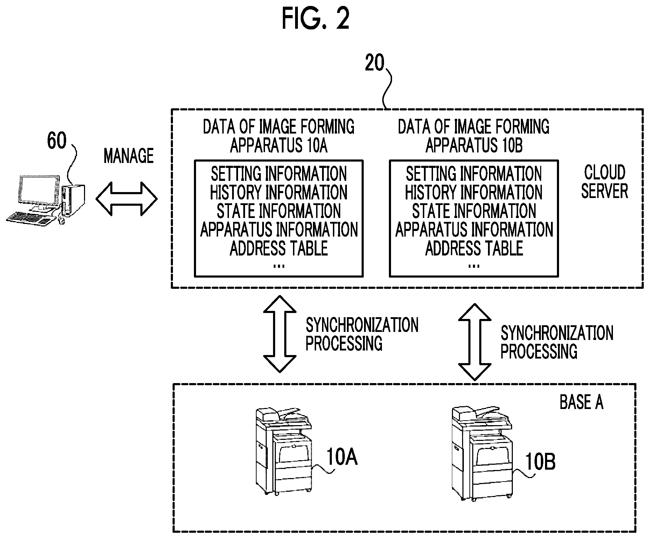

FIG. 1 is a diagram showing a system configuration of an information processing system according to an exemplary embodiment of the present disclosure. FIG. 2 is a diagram for describing synchronization processing, which is performed between a cloud server 20 and image forming apparatuses 10A and 10B.

As shown in FIG. 1, the information processing system of an exemplary embodiment of the present disclosure has a configuration in which two image forming apparatuses 10A and 10B installed at a base A are connected to the cloud server 20 via an Internet 30. The image forming apparatuses 10A and 10B are mutually connected by a network 40 in the base A. The image forming apparatuses 10A and 10B are so-called multifunctional apparatuses having a plurality of functions such as a print function, a scan function, a copy function, and a facsimile function.

As shown in FIG. 2, the cloud server 20 provides a service called digital shadow that holds various types of data such as setting information, history information, state information, apparatus information, and an address table, which are stored in a physical device connected via the Internet 30, in synchronization with the physical device.

Specifically, the cloud server 20 stores various types of data, such as the setting information, of the image forming apparatuses 10A and 10B as the physical devices while performing the synchronization processing with the image forming apparatuses 10A and 10B. The cloud server 20 is an example of the information processing system in the technique of the present disclosure. Further, the image forming apparatuses 10A and 10B are examples of target apparatuses in the technique of the present disclosure.

With such a service, even in a case where a terminal device managing a certain apparatus cannot be directly connected to the apparatus to be managed, the terminal device can perform the management such as checking of a state of the apparatus to be managed and a setting change. For example, a case will be described in which an external terminal device 60 attempts to change the setting information of the image forming apparatus 10A. First, the external terminal device 60 changes the setting information of the image forming apparatus 10A, which is present in the cloud server 20. With the change, in a case where the synchronization processing with the cloud server 20 is executed, the image forming apparatus 10A acquires the updated setting information and changes the setting information of the image forming apparatus 10A.

That is, with the use of such a service, even in a case where the external terminal device 60 cannot be connected to the image forming apparatuses 10A and 10B set in the base A, the external terminal device 60 can execute the checking of the states of the image forming apparatuses 10A and 10B, the updating of the setting information, and the like.

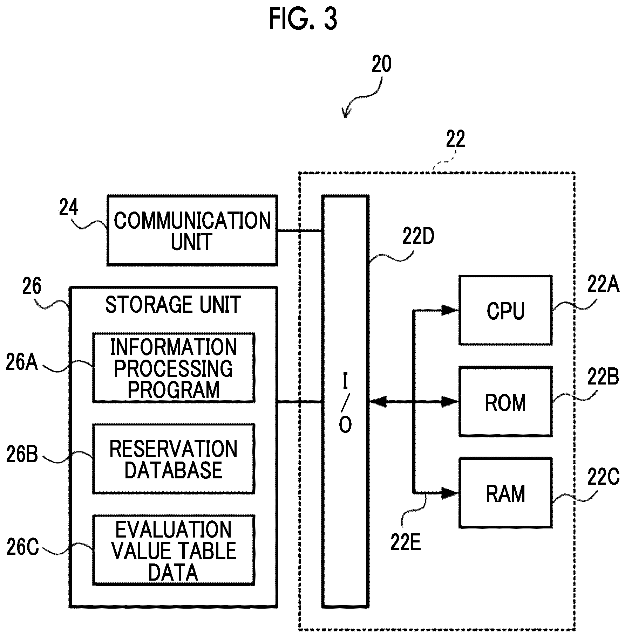

Next, the cloud server 20 will be described in detail. FIG. 3 is a block diagram showing a hardware configuration of the cloud server 20 according to the present exemplary embodiment.

As shown in FIG. 3, the cloud server 20 includes a controller 22. The controller 22 is configured of a device including a general computer.

The controller 22 includes a central processing unit (CPU) 22A, a read only memory (ROM) 22B, a random access memory (RAM) 22C, and an input/output interface (I/O) 22D. The CPU 22A, the ROM 22B, the RAM 22C, and the I/O 22D are connected to each other via a bus 22E. The bus 22E includes a control bus, an address bus, and a data bus.

Further, a communication unit 24 and a storage unit 26 are connected to the I/O 22D.

The communication unit 24 is an interface for performing data communication with the external terminal device 60 or the like.

The storage unit 26 is configured of a non-volatile external storage device such as a hard disk. As shown in FIG. 3, the storage unit 26 stores an information processing program 26A, a reservation database 26B, and evaluation value table data 26C.

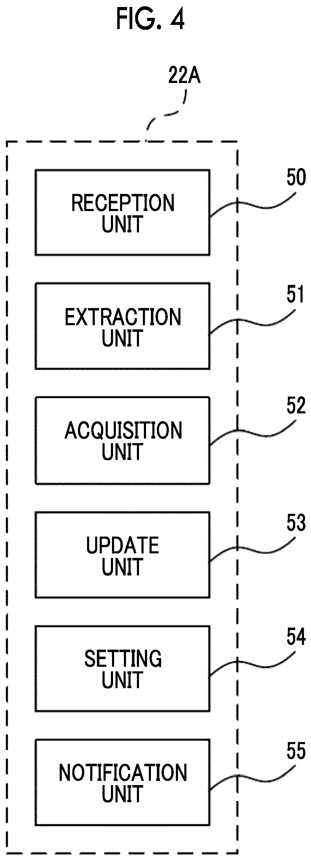

FIG. 4 shows an example of a functional configuration of the information processing system 10.

The information processing system 10 functionally includes a reception unit 50, an extraction unit 51, an acquisition unit 52, an update unit 53, a setting unit 54, and a notification unit 55. These functional configurations are realized by the CPU 22A reading out the information processing program 26A from the storage unit 26 and expanding the information processing program 26A into the RAM 22C to execute the information processing program 26A.

The reception unit 50 receives, from the terminal device 60, the setting information for changing the setting of the image forming apparatus 10A. The setting information is for changing the setting of the image forming apparatus 10A, and includes parameters necessary for executing each function provided by the image forming apparatus 10A, such as the print function, application data for installing an application related to each function in the image forming apparatus 10A, and the like, but is not limited to these.

Specific examples of a case where the setting of the image forming apparatus 10A is changed include a case where the parameters necessary for executing each function are collectively set in a case where the image forming apparatus 10A is newly installed at the base A, and a case where the parameters of the image forming apparatus 10A that is already in operation are changed or the application related to each function is installed by an add-on, but are not limited to these cases.

Further, in the present exemplary embodiment, a plurality of vendors can each set the parameters or install the application for the image forming apparatus 10A. Thus, the reception unit 50 temporarily registers the received setting information in the reservation database 26B, instead of immediately setting the received setting information in the image forming apparatus 10A. The setting, in the image forming apparatus 10A, of the setting information registered in the reservation database 26B is executed at, for example, a timing set in advance. In this case, there may be a conflict such as the fact that, in a case where one reservation is executed, the other reservation is not established. For example, in a case where a vendor X changes the parameter already set in the image forming apparatus 10A, the application that a company Y wants to install cannot be executed.

The cloud server 20 performs processing such that, even in a case where the reservations of the plurality of vendors conflict with each other, the conflict is resolved as much as possible, and the plurality of vendors can execute the setting of the parameters, the installation of the application, and the like for the image forming apparatus 10A.

In a case where there are a plurality of pieces of setting information received by the reception unit 50, the extraction unit 51 extracts conflict setting information in a conflict relationship among the plurality of pieces of setting information.

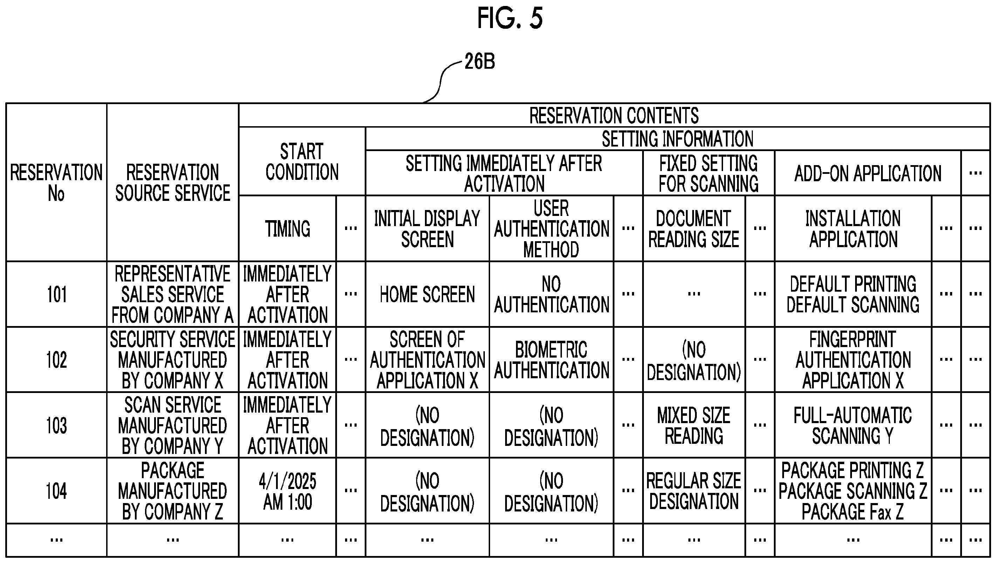

For example, a case will be described in which reservation Nos. 101 to 104 are registered in the reservation database 26B, as shown in FIG. 5. Further, a case will be described in which an upper limit of the number of installable applications is four.

As shown in FIG. 5, the reservation database 26B represents a correspondence relationship of a reservation No, a reservation source service indicating a service provided by a reservation source, and reservation contents. The reservation contents include a start condition and the setting information for reservation execution. The start condition includes a timing for executing the reservation and the like. The setting information includes a setting immediately after activation of the image forming apparatus 10A as a real device (hereinafter, RD), fixed setting for scanning, an application (add-on application)to be added on, and the like. The setting immediately after the activation of the RD includes an initial display screen, a user authentication method, and the like. Further, the fixed setting for scanning includes a document reading size and the like of a two-sided reading function. Further, the add-on application includes an application to be installed (hereinafter, installation application) and the like.

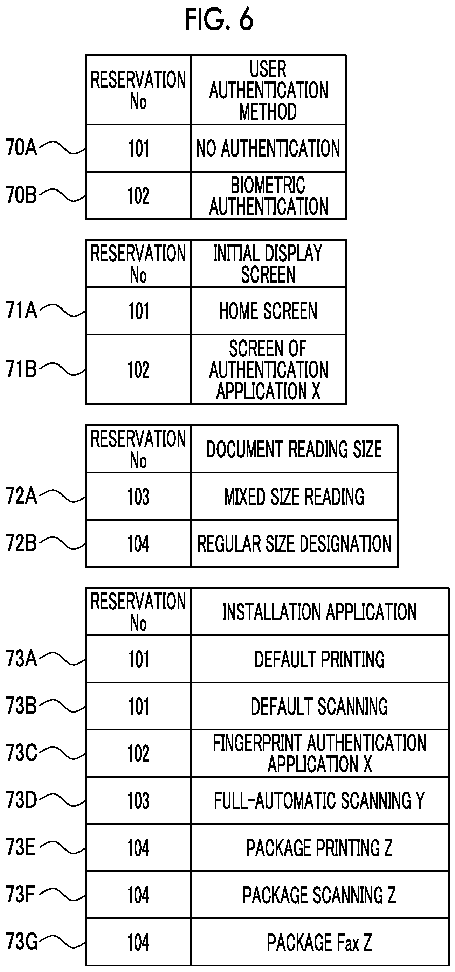

In the case of the example shown in FIG. 5, the user authentication method is set to no authentication in the setting information for the reservation No. 101, whereas the user authentication method is set to biometric authentication in the setting information for the reservation No. 102. As described above, there is a difference in the user authentication method between the reservation No. 101 and the reservation No. 102. Thus, the pieces of setting information of the user authentication method for the reservation No. 101 and the reservation No. 102 are extracted as conflict setting information 70A and 70B, as shown in FIG. 6.

Further, the initial display screen is a home screen in the setting information for the reservation No. 101, whereas the initial display screen is a screen of an authentication application X in the setting information for the reservation No. 102. As described above, there is a difference in the initial display screen between the reservation No. 101 and the reservation No. 102. Thus, the pieces of setting information of the initial display screen for the reservation No. 101 and the reservation No. 102 are extracted as conflict setting information 71A and 71B, as shown in FIG. 6.

Further, the document reading size of the two-sided reading function is mixed size reading in the setting information for the reservation No. 103, whereas the document reading size of the two-sided reading function is regular size designation in the setting information for the reservation No. 104. As described above, there is a difference in the document reading size of the two-sided reading function between the reservation No. 103 and the reservation No. 104. Thus, the pieces of setting information of the document reading size of the two-sided reading function for the reservation No. 103 and the reservation No. 104 are extracted as conflict setting information 72A and 72B, as shown in FIG. 6.

Further, the number of installation applications is two for default printing and default scanning in the setting information for the reservation No. 101, the number of installation applications is one for a fingerprint authentication application X in the setting information for the reservation No. 102, the number of installation applications is one for full-automatic scanning in the setting information for the reservation No. 103, and the number of installation applications is three for package printing Z, package scanning Z, and package Fax Z in the setting information for the reservation No. 104. As described above, the number of installable applications exceeds four, which is the upper limit. Thus, the pieces of setting information of the installation applications for the reservation Nos. 101 to 104 are extracted as conflict setting information 73A to 73G, as shown in FIG. 6.

The acquisition unit 52 acquires, for the plurality of pieces of conflict setting information, evaluation values related to effects of functions in a case where the setting of the image forming apparatus 10A is changed by the conflict setting information extracted by the extraction unit 51. Specifically, the acquisition unit 52 acquires the evaluation value of each piece of conflict setting information, based on the evaluation value table data 26C.

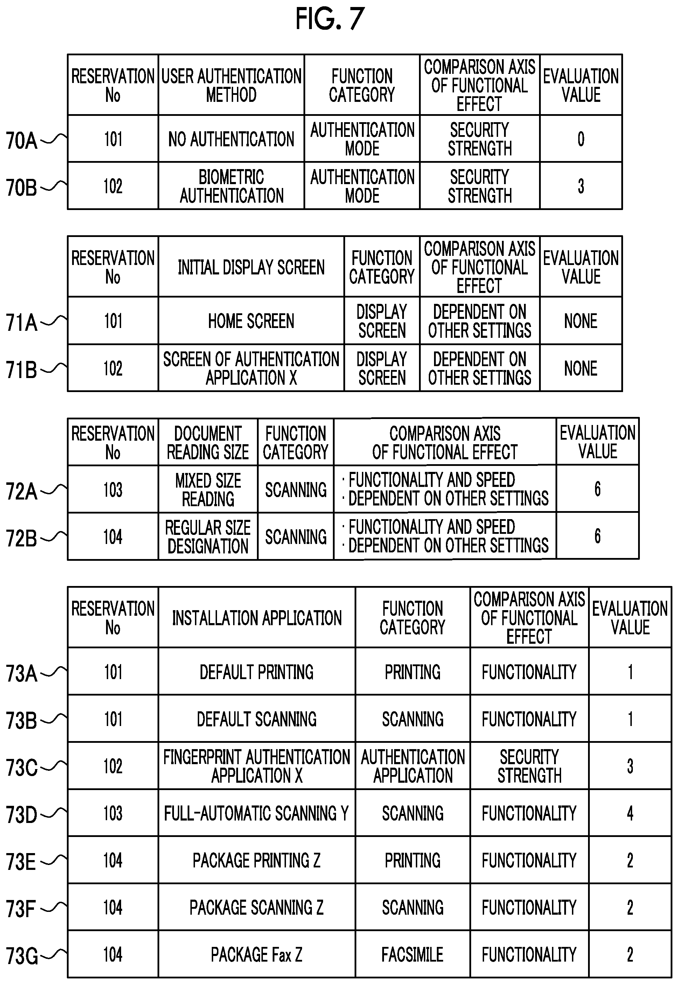

The evaluation value table data 26C defines a correspondence relationship between the setting information and the evaluation value. The evaluation value is decided in advance according to a function category and a comparison axis of a functional effect in the setting information. Further, a larger evaluation value means higher evaluation. For example, as shown in FIG. 7, the conflict setting information 70A of the user authentication method for the reservation No. 101 is no authentication, the function category is an authentication mode, and the comparison axis of the functional effect is security strength. In this case, the evaluation value is increased as the security strength is increased, for example, 0 in a case of no authentication, 1 in a case of basic authentication, 2 in a case of card authentication, and 3 in a case of the biometric authentication. Therefore, the evaluation value for the conflict setting information 70A of the user authentication method for the reservation No. 101 is 0 since the conflict setting information 70A thereof is no authentication. Further, the evaluation value for the conflict setting information 70B of the user authentication method for the reservation No. 102 is 3 since the conflict setting information 70B thereof is the biometric authentication.

In a case of the setting information on which determination of resolution of the conflict relationship depends on other settings, the evaluation value is none. For example, the conflict setting information 71A of the initial display screen for the reservation No. 101 is the home screen, but the evaluation value is none since the comparison axis of the functional effect is dependent on other settings. The conflict setting information 71B of the initial display screen for the reservation No. 102 is the screen of the authentication application X, but the evaluation value is none since the comparison axis of the functional effect is dependent on other settings, as in the reservation No. 101.

Further, the conflict setting information 72A of the two-sided reading function for the reservation No. 103 is the mixed size reading, the function category is the scanning, and the comparison axis of the functional effect is functionality and speed, and dependent on other settings. In this case, the evaluation value is 6 as an example. Further, the conflict setting information 72B of the two-sided reading function for the reservation No. 104 is the regular size designation, the function category is the scanning, and the comparison axis of the functional effect is functionality and speed, and dependent on other settings. In this case, the evaluation value is 6, as in the reservation No. 103.

Further, the conflict setting information 73A of the add-on application for the reservation No. 101 is the default printing, the function category is the printing, and the comparison axis of the functional effect is the functionality. In this case, the evaluation value is 1. Similarly, the evaluation value for the default scanning, which is the conflict setting information 73B of the add-on application for the reservation No. 101, is 1. Further, the evaluation value for the fingerprint authentication application X, which is the conflict setting information 73C of the add-on application for the reservation No. 102, is 3. Further, the evaluation value for the full-automatic scanning Y, which is the conflict setting information 73D of the add-on application for the reservation No. 103, is 4. Further, the evaluation value for the package printing Z, which is the conflict setting information 73E of the add-on application for the reservation No. 104, is 2. Further, the evaluation value for the package scanning Z, which is the conflict setting information 73F of the add-on application for the reservation No. 104, is 2. Further, the evaluation value for the package Fax Z, which is the conflict setting information 73G of the add-on application for the reservation No. 104, is 2. The package printing has a higher function than the default printing, and thus has a higher evaluation value than the default printing. The same applies to the default scanning and the package scanning.

Based on the evaluation values for the plurality of pieces of conflict setting information acquired by the acquisition unit 52, the update unit 53 updates at least one of the plurality of pieces of conflict setting information such that the conflict relationship is resolved.

Specifically, the update unit 53 performs processing of not employing the conflict setting information for which the evaluation value is equal to or less than a threshold value or correcting the conflict setting information to another piece of the conflict setting information to perform extraction processing of the conflict setting information, acquisition processing of the evaluation value, and update processing of the conflict setting information.

Hereinafter, a case will be described in which the conflict setting information for which the evaluation value is equal to or less than the threshold value is not employed.

In the example of FIG. 7, the evaluation value for the conflict setting information 70A of the user authentication method for the reservation No. 101 is 0, and the evaluation value for the conflict setting information 70B of the user authentication method for the reservation No. 102 is 3. For example, in a case where the threshold value is set to 2, the conflict setting information 70A of the user authentication method for the reservation No. 101 is not employed.

Further, since both the evaluation value for the conflict setting information 71A of the initial display screen for the reservation No. 101 and the evaluation value for the conflict setting information 71B of the initial display screen for the reservation No. 102 are none, the determination of the resolution of the conflict relationship is postponed to the next time or later.

Further, since both the evaluation value for the conflict setting information 71A of the document reading size of the two-sided reading function for the reservation No. 103 and the evaluation value for the conflict setting information 72B of the document reading size of the two-sided reading function for the reservation No. 104 are 6, the determination of the resolution of the conflict relationship is postponed to the next time or later.

Further, the evaluation values of the pieces of conflict setting information 73A to 73G of the add-on applications for the reservations No. 101 to 106 are 1, 1, 3, 4, 2, 2, and 2. In a case where the upper limit of the number of add-on applications is four, first, the conflict setting information 73D of the full-automatic scanning Y of the reservation No. 101, which has the evaluation value of 4, and the conflict setting information 73C of the fingerprint authentication application X of the reservation No. 102, which has the evaluation value of 3, are employed. Here, one of the pieces of conflict setting information 73E to 73G of the add-on applications for the reservations No. 104 to 106, which have the evaluation value of 2, needs not to be employed. In this case, the package scanning Z of the reservation No. 105, which has a function inferior to the full-automatic scanning Y of the employed reservation No. 104, does not need to be added on, and thus the conflict setting information 73F is not employed.

The update unit 53 performs again the extraction processing of the conflict setting information, the acquisition processing of the evaluation value, and the update processing of the conflict setting information, except for the conflict setting information that is not employed. With repeating of the above processing, the number of pieces of conflict setting information decreases.

For example, in the example of FIG. 7, since the conflict setting information 70A for the reservation No. 101 is not employed, the conflict relationship is resolved for the conflict setting information of the user authentication method.

Further, since the conflict setting information 70A of the user authentication method for the reservation No. 101 is not employed as described above, the conflict setting information 71A for the reservation No. 101 is not employed in the same manner, and thus the conflict relationship is resolved for the conflict setting information of the initial display screen.

Further, since the conflict setting information 70F of the add-on application for the reservation No. 104 is not employed as described above, the conflict setting information 72B for the reservation No. 104 is not employed in the same manner, and thus the conflict relationship is resolved for the conflict setting information of the document reading size of the two-sided reading function.

Accordingly, the conflict relationship is resolved for each of the user authentication method, the initial display screen, the document reading size of the two-sided reading function, and the setting information of the add-on application.

The setting unit 54 sets, in the image forming apparatus 10A, a plurality of pieces of setting information for which the conflict relationship is resolved. Specifically, the biometric authentication of the reservation No. 102 is set for the user authentication method. Further, the screen of the authentication application X of the reservation No. 102 is set for the initial display screen. Further, the mixed size reading of the reservation No. 103 is set for the document reading size of the two-sided reading function. Further, the fingerprint authentication application X of the reservation No. 102, the full-automatic scanning Y of the reservation No. 103, the package printing Z of the reservation No. 104, and the package Fax Z of the reservation No. 104 are set for the add-on application.

The conflict relationship may not be resolved and may remain depending on contents of the conflict setting information.

In a case where there is remaining conflict setting information for which the conflict relationship is not resolvable, the notification unit 55 issues a notification to a provider of the setting information. Accordingly, the provider can be prompted to take measures to cancel or correct the reservation to resolve the conflict relationship.

Further, a setting may be made whether or not to enable automatic update of the setting information for the image forming apparatus 10A.

In this case, in a case where the automatic update of the setting information is enabled, the setting unit 54 sets the setting information in the image forming apparatus 10A without the notification to the provider of the setting information.

On the other hand, in a case where the automatic update of the setting information is disabled, the setting unit 54 notifies the provider of the setting information of a result of the update processing of the conflict setting information, and sets the setting information in the image forming apparatus 10A in a case where permission is obtained.

In the above, the case has been described in which the update unit 53 does not employ the conflict setting information for which the evaluation value is equal to or less than the threshold value, but the processing of correcting the conflict setting information to another piece of the conflict setting information may be performed. Hereinafter, a specific example will be described.

A case will be described in which there is a conflict in a display order of application icons on a display panel, as the setting information. In the display panel, assumption is made that nine icons can be displayed in a matrix of 3 × 3 in an initial display, and 10th and subsequent icons can be displayed by a scroll operation. Further, the display order is assumed to be set to 1 for a most noticeable upper left, and 2 to 9 toward a right direction and a downward direction. Further, regarding an application for which the display order is set to 1, for example, an icon of an application that is used with the highest frequency is disposed in preference.

In such a situation, assumption is made that the full-automatic scanning Z is registered for the reservation No. 103, and the package printing Z is registered for the reservation No. 104, as the setting information of the add-on application. Further, assumption is made that 1 is registered as the setting information of the display order of icons of the reservations No. 103 and 104, and the icons are in conflict with each other.

A usage frequency of the scanning based on log data is assumed to be higher than the usage frequency of the printing.

In this case, the update unit 53 gives priority to the display order of the icon of the full-automatic scanning Z of the reservation No. 103, and corrects, to 2, the setting information of the display order of the icon of the package printing Z of the reservation No. 104. Accordingly, the conflict is resolved.

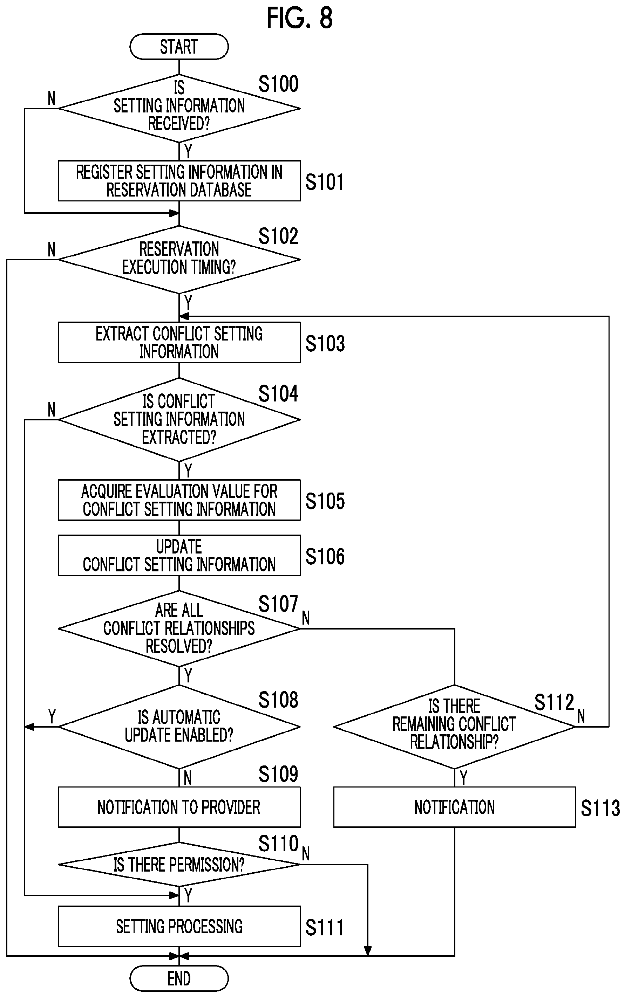

Next, information processing executed by the CPU 22A of the cloud server 20 will be described. FIG. 8 shows a flowchart of the information processing according to the present exemplary embodiment. The information processing of FIG. 8 is repeatedly executed.

In step S100, the CPU 22A determines whether or not the setting information of the image forming apparatus 10A for changing the setting of the image forming apparatus 10A is received from the terminal device 60. The processing proceeds to step S101 in a case where the setting information is received, and the processing proceeds to step S 102 in a case where the setting information is not received.

In step S101, the CPU 22A registers the setting information received in step S100 in the reservation database 26B.

In step S102, the CPU 22A determines whether or not a reservation execution timing has arrived, that is, whether or not a timing for setting the setting information registered in the reservation database 26B in the image forming apparatus 10A has arrived. The processing proceeds to step S103 in a case where the reservation execution timing has arrived, and the processing ends in a case where the reservation execution timing has not arrived.

In step S103, the CPU 22A extracts the conflict setting information in the conflict relationship from the pieces of setting information registered in the reservation database 26B.

In step S104, the CPU 22A determines whether or not the conflict setting information is extracted in step S103. The processing proceeds to step S105 in a case where the conflict setting information is extracted, and the processing proceeds to step S111 in a case where the conflict setting information is not extracted.

In step S105, the CPU 22A acquires, from the evaluation value table data 26C, the evaluation value for the conflict setting information extracted in step S103.

In step S106, the CPU 22A updates the conflict setting information such that the conflict relationship is resolved, based on the evaluation value acquired in step S105. That is, the processing of not employing the conflict setting information for which the evaluation value is equal to or less than a threshold value or correcting the conflict setting information to another piece of the conflict setting information is performed.

In step S107, the CPU 22A determines whether or not all the conflict relationships are resolved. The processing proceeds to step S108 in a case where all the conflict relationships are resolved, and the processing proceeds to step S112 in a case where all the conflict relationships are not resolved.

In step S108, the CPU 22A determines whether or not the automatic update of the setting information is enabled. The processing proceeds to step S109 in a case where the automatic update is disabled, and the processing proceeds to step S111 in a case where the automatic update is enabled.

In step S109, the CPU 22A notifies the terminal device 60, which is the provider of the setting information, of the result of the update processing of the conflict setting information in step S106.

In step S110, the CPU 22A determines whether or not a notification indicating permission for the update of the setting information has been received from the terminal device 60 of the provider notified in step S109. The processing proceeds to step S111 in a case where the notification indicating the permission is received, and the present routine is ended in a case where the notification indicating the permission is not received.

In step S111, the CPU 22A sets the setting information for which the conflict relationship is resolved in the image forming apparatus 10A.

On the other hand, the processing proceeds to step S112 in a case where the determination in step S107 is negative.

In step S112, the CPU 22A determines whether or not there is remaining conflict setting information for which the conflict relationship is not resolvable. The processing proceeds to step S113 in a case where there is the remaining conflict setting information for which the conflict relationship is not resolvable, and the processing proceeds to step S103 in a case where there is no remaining conflict setting information for which the conflict relationship is not resolvable.

In step S113, the CPU 22A notifies the terminal device 60, which is the provider of the conflict setting information for which the conflict relationship is not resolvable.

As described above, in the present exemplary embodiment, the setting information for changing the setting of the image forming apparatus 10Ais received, the evaluation value related to the effect of the function in a case where the setting of the image forming apparatus 10A is changed by the conflict setting information in the conflict relationship is acquired for each piece of the conflict setting information, and the processing of not employing the conflict setting information for which the evaluation value is equal to or less than the threshold value or correcting the conflict setting information to another piece of the conflict setting information is performed, based on the acquired evaluation value, such that the conflict relationship is resolved. Accordingly, even in a case where the setting information for changing the setting of the image forming apparatus 10A is in conflict, a part of the pieces of setting information can be prevented from being unable to be set.

The cloud server 20 in the present exemplary embodiment has been described as being configured by a single device, but may be configured by a plurality of devices.

Further, in the above exemplary embodiment, the example has been described in which the program is stored in the storage unit 26, but the storage destination of the program is not limited to the storage unit 26. The program of the present disclosure can also be provided in a form recorded on a storage medium readable by the CPU 22A. For example, the program may be provided in a form recorded on an optical disk, such as a compact disk read only memory (CD-ROM) and a digital versatile disk read only memory (DVD-ROM). Further, the program may be provided in a form recorded in a portable semiconductor memory, such as a universal serial bus (USB) memory and a memory card. Further, the program may be provided in a form recorded in the ROM 22B. The ROM 22B, the storage unit 26, the CD-ROM, the DVD-ROM, the USB, and the memory card are examples of non-transitory storage media.

Furthermore, the cloud server 20 may download a program from an external device (not shown) through the Internet, and store the downloaded program in the storage unit 26. In this case, the CPU 22A of the cloud server 20 may read, from the storage unit 26, the information processing program, which is downloaded from the external device, and execute various types of processing.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

Further, the program in the present disclosure may be provided as a program product.

Regarding the above exemplary embodiments, the following supplementary notes will be further disclosed.
(((1))) An information processing system comprising:
   a processor configured to:
   receive setting information for changing a setting of a target apparatus;
   extract, in a case where there are a plurality of pieces of received setting information, conflict setting information in a conflict relationship from the plurality of pieces of setting information;
   acquire, for a plurality of pieces of the conflict setting information, evaluation values regarding an effect of a function in a case where the setting of the target apparatus is changed by the conflict setting information;
   update at least one of the plurality of pieces of conflict setting information such that the conflict relationship is resolved, based on the evaluation values for the plurality of pieces of conflict setting information; and
   set, in the target apparatus, the plurality of pieces of setting information for which the conflict relationship is resolved.
(((2))) The information processing system according to (((1))), wherein the processor is configured to:
   perform processing of not employing the conflict setting information for which an evaluation value is equal to or less than a threshold value or correcting the conflict setting information to another piece of the conflict setting information to perform extraction processing of the conflict setting information, acquisition processing of the evaluation value, and update processing of the conflict setting information.
(((3))) The information processing system according to (((1))) or (((2))), wherein the processor is configured to:
   in a case where there is remaining conflict setting information for which the conflict relationship is not resolvable, issue a notification to a provider of the setting information.
(((4))) The information processing system according to any one of (((1))) to (((3))), wherein the processor is configured to:
   in a case where automatic update of the setting information is enabled, set the setting information in the target apparatus without issuing a notification to a provider of the setting information.
(((5))) The information processing system according to any one of (((1))) to (((4))), wherein the processor is configured to:
   in a case where automatic update of the setting information is disabled, notify a provider of the setting information of a result of update processing of the conflict setting information, and set the setting information in the target apparatus in a case where permission is obtained.
(((6))) An information processing program for causing a computer to execute a process comprising:
   receiving setting information for changing a setting of a target apparatus;
   extracting, in a case where there are a plurality of pieces of received setting information, conflict setting information in a conflict relationship from the plurality of pieces of setting information;
   acquiring, for a plurality of pieces of the conflict setting information, evaluation values regarding an effect of a function in a case where the setting of the target apparatus is changed by the conflict setting information;
   updating at least one of the plurality of pieces of conflict setting information such that the conflict relationship is resolved, based on the evaluation values for the plurality of pieces of conflict setting information; and
   setting, in the target apparatus, the plurality of pieces of setting information for which the conflict relationship is resolved.

With the information processing system according to (((1))) and the information processing program according to (((6))), even in a case where the setting information for changing the setting of the target apparatus is in conflict, a part of the pieces of setting information can be prevented from being unable to be set.

With the information processing system according to (((2))), the conflict setting information in the conflict relationship can be reduced.

With the information processing system according to (((3))), the provider of the conflict setting information for which the conflict relationship is not resolvable can be prompted to take measures to resolve the conflict relationship.

With the information processing system according to (((4))), the setting information can be quickly set in the target apparatus, as compared with a case where the permission for the setting of the setting information is obtained from the provider of the setting information and then the setting information is set.

With the information processing system according to (((5))), the setting information against the intention of the provider of the setting information is prevented from being set.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: information processing system
10A, 10B: image forming apparatus
20: cloud server
22: controller
24: communication unit
26: storage unit
26A: information processing program
26B: reservation database
26C: evaluation value table data
30: Internet
40: network
50: reception unit
51: extraction unit
52: acquisition unit
53: update unit
54: setting unit
55: notification unit
60: terminal device

## Claims

1. An information processing system comprising:
a processor configured to:
receive setting information for changing a setting of a target apparatus;
extract, in a case where there are a plurality of pieces of received setting information, conflict setting information in a conflict relationship from the plurality of pieces of setting information;
acquire, for a plurality of pieces of the conflict setting information, evaluation values regarding an effect of a function in a case where the setting of the target apparatus is changed by the conflict setting information;
update at least one of the plurality of pieces of conflict setting information such that the conflict relationship is resolved, based on the evaluation values for the plurality of pieces of conflict setting information; and
set, in the target apparatus, the plurality of pieces of setting information for which the conflict relationship is resolved.

2. The information processing system according to claim 1, wherein the processor is configured to:
perform processing of not employing the conflict setting information for which an evaluation value is equal to or less than a threshold value or correcting the conflict setting information to another piece of the conflict setting information to perform extraction processing of the conflict setting information, acquisition processing of the evaluation value, and update processing of the conflict setting information.

3. The information processing system according to claim 1 or 2, wherein the processor is configured to:
in a case where there is remaining conflict setting information for which the conflict relationship is not resolvable, issue a notification to a provider of the setting information.

4. The information processing system according to any one of claims 1 to 3, wherein the processor is configured to:
in a case where automatic update of the setting information is enabled, set the setting information in the target apparatus without issuing a notification to a provider of the setting information.

5. The information processing system according to any one of claims 1 to 4, wherein the processor is configured to:
in a case where automatic update of the setting information is disabled, notify a provider of the setting information of a result of update processing of the conflict setting information, and set the setting information in the target apparatus in a case where permission is obtained.

6. An information processing program for causing a computer to execute a process comprising:
receiving setting information for changing a setting of a target apparatus;
extracting, in a case where there are a plurality of pieces of received setting information, conflict setting information in a conflict relationship from the plurality of pieces of setting information;
acquiring, for a plurality of pieces of the conflict setting information, evaluation values regarding an effect of a function in a case where the setting of the target apparatus is changed by the conflict setting information;
updating at least one of the plurality of pieces of conflict setting information such that the conflict relationship is resolved, based on the evaluation values for the plurality of pieces of conflict setting information; and
setting, in the target apparatus, the plurality of pieces of setting information for which the conflict relationship is resolved.

7. An information processing method comprising:
receiving setting information for changing a setting of a target apparatus;
extracting, in a case where there are a plurality of pieces of received setting information, conflict setting information in a conflict relationship from the plurality of pieces of setting information;
acquiring, for a plurality of pieces of the conflict setting information, evaluation values regarding an effect of a function in a case where the setting of the target apparatus is changed by the conflict setting information;
updating at least one of the plurality of pieces of conflict setting information such that the conflict relationship is resolved, based on the evaluation values for the plurality of pieces of conflict setting information; and
setting, in the target apparatus, the plurality of pieces of setting information for which the conflict relationship is resolved.
